# EUROPEAN PATENT APPLICATION

(11) **EP 3 441 834 A1**
(43) Date of publication of application: **13.02.2019**
(21) Application number: 18155026.0
(22) Date of filing: 05.02.2018
(51) Int. Cl.: G05B 19/4099

(54) **METHOD FOR AUTOMATIC CREATION OF CUTTING PATHS IN INTERIOR SPACE OF THREE-DIMENSIONAL SHAPED PRODUCT**

(30) Priority: 07.08.2017 JP 2017152521
(71) Applicant: Matsuura Machinery Corporation, Fukui City Fukui (JP)
(72) Inventor: TARUMI, Satoru, Fukui City, Fukui (JP); KOBAYASHI, Jun, Fukui City, Fukui (JP)
(74) Representative: Lambacher, Michael

(57) **Abstract**

It is the objective to provide a construction that can automatically create cutting paths for cutting of interior spaces of three-dimensional shaped products. This objective is achieved by a method for automatic creation of cutting paths (5) in the interior space (2) of a three-dimensional shaped product (1) by the following steps, in a CAD/CAM system in which programs are designed for lamination, sintering and cutting that are necessary for creating a three-dimensional shaped product (1): 1. defining an imaginary horizontal plane (3); 2. creating cutting paths (5) in the interior wall section from the lower end successively toward the upper side; 3. creating cutting paths (5) in the interior wall section toward the upper side to the upper end; 4. joining the cutting paths (5) of step 2 and the cutting paths (5) of step 3.

## Description

### [Technical Field]

The present invention relates to a method for automatically creating horizontal cutting paths in the interior space of a three-dimensional shaped product, using a CAD/CAM system in which a program is designed for each of the steps of: laminating a powder using a squeegee, sintering by irradiation of a laser beam or electron beam, and cutting by traveling of a cutting tool, that are necessary to produce a three-dimensional shaped product.

### [Background Art]

When creating a cutting path for a cutting tool by a CAD/CAM system, it is assumed that the regions containing the cutting path are regions in which the cutting tool can be inserted.

For an enclosed interior space of a three-dimensional shaped product, therefore, such as the inner side of a water conduit, it is considered to be impossible to automatically create a cutting path in the interior space by a CAD/CAM system, under a reason that the cutting tool cannot be inserted essentially.

In light of this problem, Patent Document 1 proposes irradiating a laser light beam for interior cutting of a three-dimensional shaped product by a CAD/CAM system while adjusting the focal point of the light beam, to thereby avoid having to use a cutting tool to create a cutting path in the interior space.

In this prior art, however, a horizontal plane is first established at a location at the upper end of the interior space, the shaping region is divided into a region above the plane and a region below the plane, the CAD/CAM system is used to create the horizontal cutting paths in the upper region and the lower region, and the cutting paths of both are joined after deleting the cutting path automatically created on the plane.

However, in this method, each horizontal cutting path in the upper region and each horizontal cutting path in the lower region are separately and independently created, and as a result it is impossible for the CAD/CAM system to automatically create a program combining the cutting paths of both, since the regions do not have the parameters based on common information.

That is, in order to accomplish such joining, it is necessary to create the program manually.

According to the prior art, therefore, no method has been provided for automatic creation of horizontal cutting paths by a CAD/CAM system for cutting of the interior spaces of three-dimensional shaped products.

### [Prior Art Document]

### [Patent Document]

[Patent Document 1] USP No. 2002/0100750 A1

### [Summary of Invention]

### [Technical Problem]

An object of the present invention is providing a construction allowing automatic creation of each horizontal cutting paths which are necessary for cutting in the interior space of a three-dimensional shaped product with a CAD/CAM system.

### [Solution to Problem]

In order to solve the aforementioned problems, the present invention has the following basic features.
(1) A method for automatic creation of a cutting path in the interior space of a three-dimensional shaped product by the following steps, in a CAD/CAM system in which a program is designed for each of the steps of: lamination with a powder while a squeegee is traveling, sintering with irradiation of a laser beam or electron beam and cutting by traveling of a cutting tool, that are necessary to create a three-dimensional shaped product.
   1. An imaginary horizontal plane is defined at an intermediate location between the upper end and the lower end of the interior space.
   2. In the lower region of the imaginary horizontal plane, horizontal cutting paths on the interior wall sections, set by the program necessary for carrying out the lamination or sintering of one or a plurality of layers as a unit, are created from a location at the lower end or its vicinity, at locations set successively toward the upper side with every cutting width of the cutting tool along a vertical direction.
   3. When creation of each horizontal cutting path described in step 2 has reached the imaginary horizontal plane or a location at a distance that is shorter than the cutting width along the vertical direction from the imaginary horizontal plane, with stopping creation of the horizontal cutting path at the imaginary horizontal plane, horizontal cutting paths on the interior wall sections, that is set by the program necessary for carrying out the lamination or sintering of one or a plurality of layers as a unit, are then created in the upper region of the imaginary horizontal plane, at locations set successively toward the upper side with every cutting width of the cutting tool along the vertical direction, from a location that is higher by the cutting width than the last cutting path created in step 2, until reaching the upper end or its vicinity.
   4. The cutting paths of step 2 and the cutting paths of step 3 are joined through the imaginary horizontal plane.
(2) A method for automatic creation of a cutting path in the interior space of a three-dimensional shaped product by the following steps, in a CAD/CAM system in which a program is designed for each of the steps of: lamination with a powder while a squeegee is traveling, sintering with irradiation of a laser beam or electron beam and cutting by traveling of a cutting tool, that are necessary to create a three-dimensional shaped product.
   1. An imaginary horizontal plane is defined at an intermediate location between the upper end and the lower end of the interior space.
   2. In the lower region of the imaginary horizontal plane, horizontal cutting paths on the interior wall sections, set by the program necessary for carrying out the lamination or sintering of one or a plurality of layers as a unit, are created from a location at the lower end or its vicinity, at locations set successively toward the upper side with every cutting width of the cutting tool along a vertical direction.
   3. When creation of each horizontal cutting path described in step 2 has reached the imaginary horizontal plane or a location at a distance that is shorter than the cutting width along the vertical direction from the imaginary horizontal plane, with creating a horizontal cutting path on the imaginary horizontal plane, horizontal cutting paths on the interior wall sections, that is set by the program necessary for carrying out the lamination or sintering of one or a plurality of layers as a unit, are then created in the upper region of the imaginary horizontal plane, at locations set successively toward the upper side with every cutting width of the cutting tool along the vertical direction, from a location that is higher by the cutting width than the last cutting path created in step 2, until reaching the upper end or its vicinity.
   4. After deleting the horizontal cutting path on the imaginary horizontal plane, the cutting paths of step 2 and the cutting paths of step 3 are joined through the imaginary horizontal plane.

### [Advantageous Effects of Invention]

The present invention, as is founded on these basic constructions (1) and (2), specifies the location for a lower region and upper region created by a CAD/CAM system on a conceptually defined imaginary horizontal plane, and the CAD/CAM system can therefore automatically join the lower region and upper region through the specified location, while the programs that create the horizontal cutting paths in both regions can be automatically joined, and so it is unnecessary to further manually create a special program for joining, as is the case of the prior art.

Moreover, since the lower region and upper region can be joined through the imaginary horizontal plane without any special deformation, it is possible to carry out high-quality cutting of the interior.

### [Brief Description of Drawings]

Fig. 1 is a pair of lateral cross-sectional view illustrating the process of Example 1, (a) showing the state before inversion in the vertical direction, and (b) showing the state after inversion in the vertical direction.
Fig. 2 is a pair of lateral cross-section view illustrating the process of Example 2, (a) showing the state before rotational coordinate transformation, and (b) showing the state after the coordinate transformation.
Fig. 3 is a set of lateral cross-section view illustrating the process of the basic construction (1), (a) showing step 1, (b) showing step 2, (c) showing step 3 and (d) showing step 4 (where the "×" symbols indicate the height locations of horizontal cutting paths, and the thick solid lines indicate the cutting paths on the lower end surface and upper end surface.).
Fig. 4 is a set of lateral cross-section view illustrating the process of the basic construction (2), (a) showing step 1, (b) showing step 2, (c) showing step 3 and (d) showing step 4 (where the "x" symbols indicate the height locations of horizontal cutting paths, and the thick solid line indicates the horizontal cutting path at the imaginary horizontal plane.).

### [Description of Embodiments]

The basic constructions (1) and (2) stand on that a CAD/CAM system automatically creates a program for each step necessary to produce a three-dimensional shaped product 1, based on the steps of laminating a powder with a traveling squeegee, sintering by irradiation of a laser beam or electron beam and cutting by traveling of a cutting tool, while the fundamental technical concept of the basic constructions (1) and (2) exist in automatically creating horizontal cutting paths 5 necessary for cutting of the three-dimensional shaped product 1 in the interior space 2.

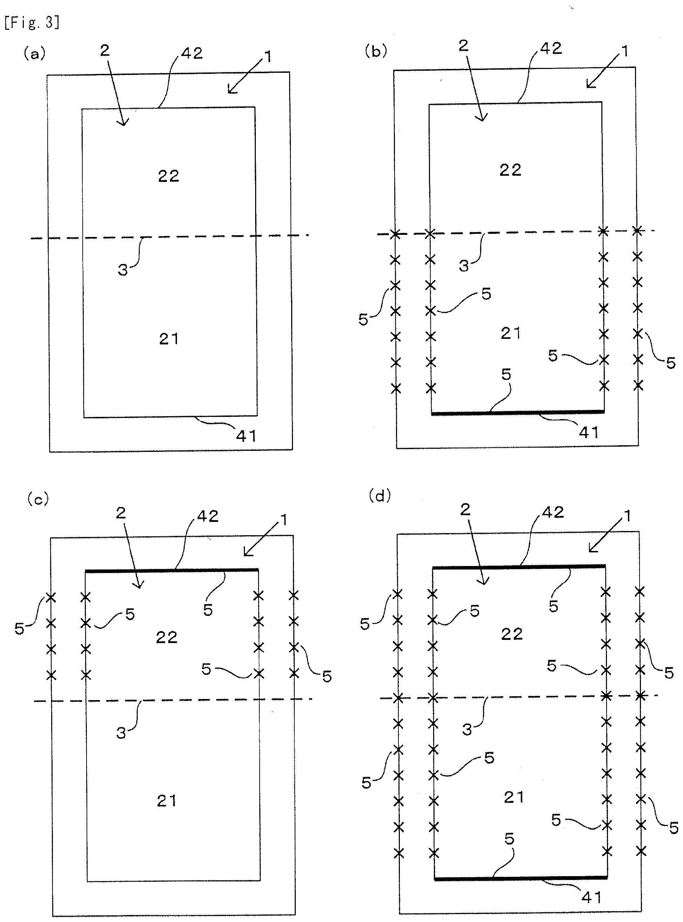

The basic construction (1) comprises the order of steps specified below, as illustrated in Fig. 3, by which cutting paths 5 are automatically created in the wall sections of the interior space 2.
1. As shown in Fig. 3(a), an imaginary horizontal plane 3 is defined at an intermediate location between the upper end and the lower end of the interior space 2.
2. As shown in Fig. 3(b), in the lower region 21 of the imaginary horizontal plane 3, horizontal cutting paths 5 on the interior wall sections, set by the program necessary for carrying out the lamination or sintering of one or a plurality of layers as a unit, are created from a location at the lower end or its vicinity, at locations set successively toward the upper side with every cutting width of the cutting tool along a vertical direction.
3. As shown in Fig. 3(c), when creation of each horizontal cutting paths 5 described in step 2 has reached the imaginary horizontal plane 3 or a location at a distance that is shorter than the cutting width along the vertical direction from the imaginary horizontal plane 3, with stopping creation of the horizontal cutting path 5 at the imaginary horizontal plane 3, horizontal cutting paths 5 on the interior wall sections, that is set by the program necessary for carrying out the lamination or sintering of one or a plurality of layers as a unit, are then created in the upper region 22 of the imaginary horizontal plane 3, at locations set successively toward the upper side with every cutting width of the cutting tool along the vertical direction, from a location that is higher by the cutting width than the last cutting path 5 created in step 2, until reaching the upper end or its vicinity.
4. As shown in Fig. 3(d), the cutting paths 5 of step 2 and the cutting paths 5 of step 3 are joined through the imaginary horizontal plane 3.

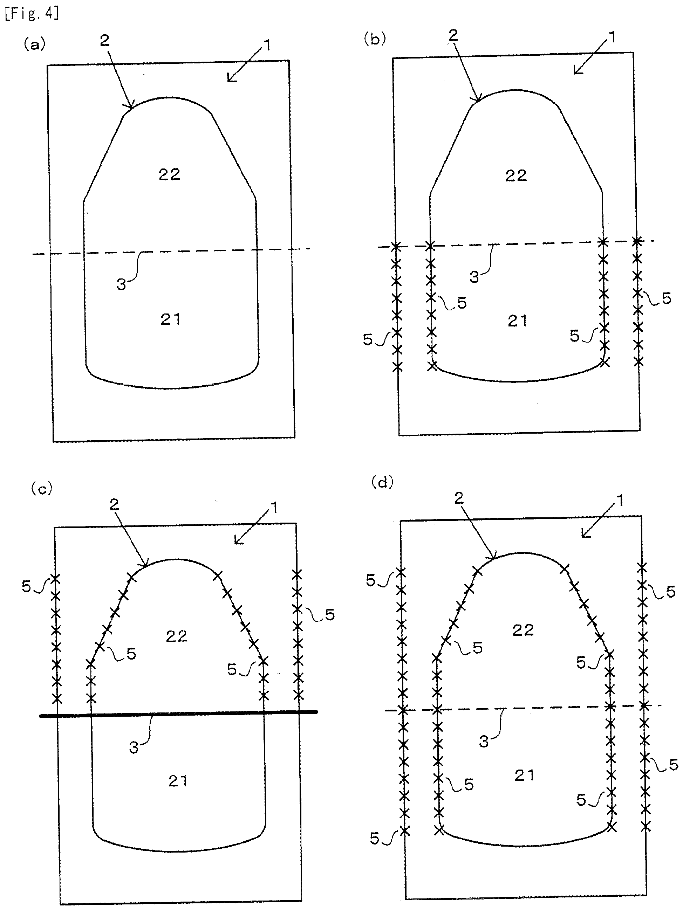

The basic construction (2) comprises the order of steps specified below, as illustrated in Fig. 4, by which cutting paths 5 are automatically created in the wall sections of the interior space 2.
1. As shown in Fig. 4(a), an imaginary horizontal plane 3 is defined at an intermediate location between the upper end and the lower end of the interior space 2.
2. As shown in Fig. 4(b), in the lower region 21 of the imaginary horizontal plane 3, horizontal cutting paths 5 on the interior wall sections, set by the program necessary for carrying out the lamination or sintering of one or a plurality of layers as a unit, are created from a location at the lower end or its vicinity, at locations set successively toward the upper side with every cutting width of the cutting tool along a vertical direction.
3. As shown in Fig. 4(c), when creation of each horizontal cutting paths 5 described in step 2 has reached the imaginary horizontal plane 3 or a location at a distance that is shorter than the cutting width along the vertical direction from the imaginary horizontal plane 3, with creating a horizontal cutting path 5 on the imaginary horizontal plane 3, horizontal cutting paths 5 on the interior wall sections, that is set by the program necessary for carrying out the lamination or sintering of one or a plurality of layers as a unit, are then created in the upper region 22 of the imaginary horizontal plane 3, at locations set successively toward upper side with every cutting width of the cutting tool along the vertical direction, from a location that is higher by the cutting width than the last cutting path 5 created in step 2, until reaching the upper end or its vicinity.
4. As shown in Fig. 4(d), after deleting the horizontal cutting path 5 on the imaginary horizontal plane 3, the cutting paths 5 of step 2 and the cutting paths 5 of step 3 are joined through the imaginary horizontal plane 3.

In both step 2 and step 3, the horizontal cutting paths 5 are automatically created for interior wall sections set by the program required to carry out the lamination or sintering of one or a plurality of layers as a unit.

In steps 2 and 3, the horizontal cutting paths 5 are set at locations successively toward the upper side with different tool cutting widths in the vertical direction, and the height locations of the horizontal cutting paths 5 are specified based on specific locations in the widths in the vertical direction.

However, the center location of the widths in the vertical direction will usually be set to be the reference location for the horizontal cutting paths 5.

As shown in Fig. 3(b) and (c), and Fig. 4(b) and (c), the horizontal cutting paths 5 at each height location on the interior wall section and horizontal cutting paths 5 at each height location on the outer wall sections are created, but it may be optionally selected whether to create the horizontal cutting paths 5 on the interior wall sections before the horizontal cutting paths 5 on the outer wall sections, or in the opposite order.

In step 3, the horizontal cutting paths 5 created at the uppermost location in the lower region 21 of the imaginary horizontal plane 3 are either at a location at the same height as the imaginary horizontal plane 3, or at a location with a shorter distance than the cutting width in the vertical direction, along the height direction, with respect to the plane.

In either case, in step 3, the horizontal cutting paths 5 shift to the upper region 22 and are created at locations set successively toward the upper side with every cutting width of the cutting tool along the vertical direction.

In the basic construction (1), the CAD/CAM system cancels creation of the cutting path 5 in the imaginary horizontal plane 3, but in the basic construction (2), the cutting path 5 of the imaginary horizontal plane 3 is created and then deleted afterwards.

Thus, the basic construction (1) is more efficient than the basic construction (2), in terms of unnecessity for creating and deleting the horizontal cutting path 5 on the imaginary horizontal plane 3.

However, in either case, the CAD/CAM system specifies and records the location of the imaginary horizontal plane 3, and depending on that location, step 4 can still be automatically carried out in either case as long as it is possible to create a combining program obtained from the program that creates the horizontal cutting paths 5 in the upper region 22 and the program that creates the horizontal cutting paths 5 in the lower region 21.

In the interior space 2, a lower end surface 41 and an upper end surface 42 must necessarily be set by the program necessary for lamination and sintering.

However, for the basic constructions (1) and (2), it is not a necessary condition for the cutting program for the lower end surface 41 and the upper end surface 42 to be automatically created.

The reason for not corresponding to the necessary condition exist in that it is not always possible to cut the lower end surface 41 and upper end surface 42 by inserting a standard tool or an undercut tool into the interior space 2.

However, cutting of the lower end surface 41 and upper end surface 42 is possible when a standard cutting tool or an undercut tool can be inserted into the interior space 2 and the entire regions or partial regions of the lower end surface 41 and upper end surface 42 can be cut, or when a rotational position for the tip of a standard cutting tool or undercut tool has been set in the cutting surface.

In such cases, as shown in Fig. 4(b),
a embodiment may be employed for step 2 comprising, before creating the horizontal cutting paths 5, the cutting paths 5 for the lower end surface 41 set by the program necessary for lamination and sintering are created with the premise that a standard cutting tool is used, and
a embodiment may be employed for step 3 comprising, after the horizontal cutting paths 5 have been created, the cutting paths 5 for the upper end surface 42 set by the program necessary for lamination and sintering is created with the premise that an undercut tool is used.

These embodiments may be employed in a case that the upper end surface 42 and lower end surface 41 are flat surfaces as shown in Fig. 3, or in a case that they are curved as shown in Fig. 4.

As shown in Fig. 3, when all of the interior wall sections in the upper region 22 and lower region 21 are vertical, the horizontal cutting paths 5 can all be created with the premise that a standard cutting tool is used.

In contrast, as shown in Fig. 4(c), when the shape is comprised in that the horizontal direction width of the interior wall section gradually narrows along the upward direction in a partial region in the vertical direction, the horizontal cutting paths 5 can be automatically created by an embodiment in which the horizontal cutting paths 5 are created with the premise of using an undercut tool in the regions of the interior wall section exhibiting the shape.

Examples of the invention will now be described.

### [Example 1]

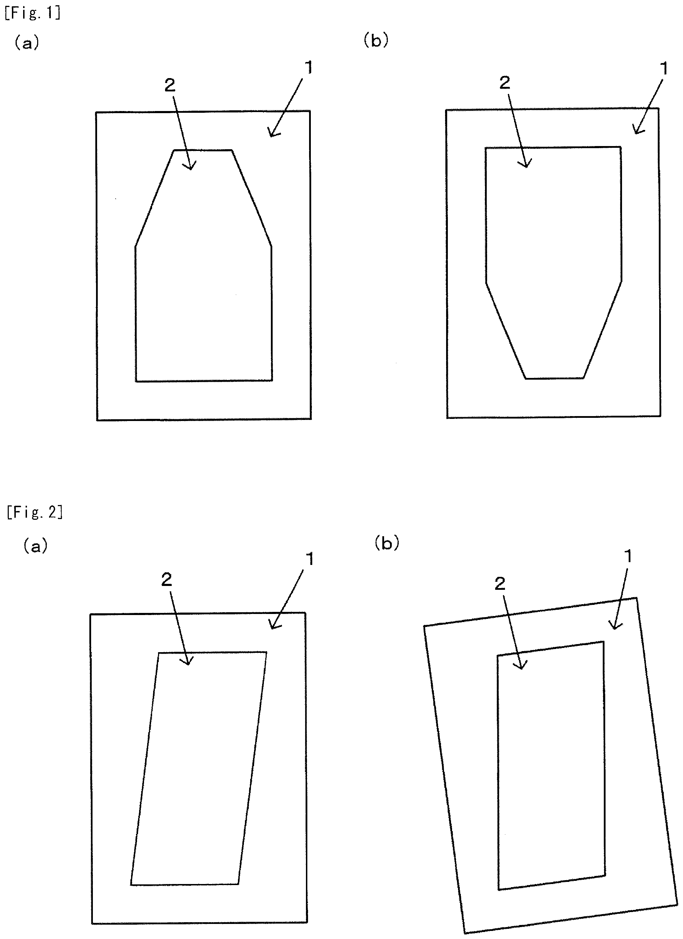

In Example 1, as shown in Fig. 1, when the shape is comprised in that the horizontal direction width of the interior wall section gradually narrows along the upward direction in a partial region in the vertical direction, while the interior wall section is vertical at the other height regions, the horizontal cutting paths 5 in each of the steps 1, 2, 3 and 4 are created after inverting the upper end locations and the lower end locations.

In Example 1, a portion of the region along the height direction of the interior wall section narrows toward the upper end, as shown in Fig. 1, and while such a case has conventionally required the use of an undercut tool, since the other regions along the height direction are in the vertical direction, inversion of the lower end and upper end allows a program to be automatically created assuming the use of a standard cutting tool for the horizontal cutting paths 5, thus contributing to more efficient creation of the cutting paths 5.

### [Example 2]

In Example 2, as shown in Fig. 2, when the facing interior wall sections are parallel slanting state in all of the regions along the vertical direction, the horizontal cutting paths 5 in each of steps 1, 2, 3 and 4 are created after carrying out coordinate transformation from the slanting direction to the vertical direction in all of the regions of the three-dimensional shaped product 1.

The use of an undercut tool for slanted interior wall sections has conventionally been unavoidable, but in Example 2, the mutually facing interior wall sections are slanted in a parallel manner along the height direction, and therefore by coordinate transformation with an angle shift so that the direction of inclination is vertical, therefore it is possible to create the cutting paths 5 with the premise that a standard tool will be used for all of the regions, thus allowing the cutting paths 5 to be created in a more efficient manner.

### [Industrial Applicability]

The present invention carries out full automation of horizontal cutting paths in the interior space of a three-dimensional shaped product using a CAD/CAM system, and it can therefore be utilized in a wide range of three-dimensional shaping processes in which creation of interior spaces is indispensable.

### [Reference Signs List]

1: Three-dimensional shaped product
2: Interior space
21: Lower region of interior space
22: Upper region of interior space
3: Imaginary horizontal plane
41: Lower end surface
42: Upper end surface
5: Cutting path

## Claims

1. A method for automatic creation of a cutting path in the interior space of a three-dimensional shaped product by the following steps, in a CAD/CAM system in which a program is designed for each of the steps of: lamination with a powder while a squeegee is traveling, sintering with irradiation of a laser beam or electron beam and cutting by traveling of a cutting tool, that are necessary to create a three-dimensional shaped product:
(1) an imaginary horizontal plane is defined at an intermediate location between the upper end and the lower end of the interior space;
(2) in the lower region of the imaginary horizontal plane, horizontal cutting paths on the interior wall sections, set by the program necessary for carrying out the lamination or sintering of one or a plurality of layers as a unit, are created from a location at the lower end or its vicinity, at locations set successively toward the upper side with every cutting width of the cutting tool along a vertical direction;
(3) when creation of each horizontal cutting path described in step 2 has reached the imaginary horizontal plane or a location at a distance that is shorter than the cutting width along the vertical direction from the imaginary horizontal plane, with stopping creation of the horizontal cutting path at the imaginary horizontal plane, horizontal cutting paths on the interior wall sections, that is set by the program necessary for carrying out the lamination or sintering of one or a plurality of layers as a unit, are then created in the upper region of the imaginary horizontal plane, at locations set successively toward the upper side with every cutting width of the cutting tool along the vertical direction, from a location that is higher by the cutting width than the last cutting path created in step 2, until reaching the upper end or its vicinity;
(4) the cutting paths of step 2 and the cutting paths of step 3 are joined through the imaginary horizontal plane.

2. A method for automatic creation of a cutting path in the interior space of a three-dimensional shaped product by the following steps, in a CAD/CAM system in which a program is designed for each of the steps of: lamination with a powder while a squeegee is traveling, sintering with irradiation of a laser beam or electron beam and cutting by traveling of a cutting tool, that are necessary to create a three-dimensional shaped product:
(1) an imaginary horizontal plane is defined at an intermediate location between the upper end and the lower end of the interior space;
(2) in the lower region of the imaginary horizontal plane, horizontal cutting paths on the interior wall sections, set by the program necessary for carrying out the lamination or sintering of one or a plurality of layers as a unit, are created from a location at the lower end or its vicinity, at locations set successively toward the upper side with every cutting width of the cutting tool along a vertical direction;
(3) when creation of each horizontal cutting path in step 2 has reached the imaginary horizontal plane or a location at a distance that is shorter than the cutting width along the vertical direction from the imaginary horizontal plane, with creating a horizontal cutting path on the imaginary horizontal plane, horizontal cutting paths on the interior wall sections, that is set by the program necessary for carrying out the lamination or sintering of one or a plurality of layers as a unit, are then created in the upper region of the imaginary horizontal plane, at locations set successively toward the upper side with every cutting width of the cutting tool along the vertical direction, from a location that is higher by the cutting width than the last cutting path created in step 2, until reaching the upper end or its vicinity;
(4) after deleting the horizontal cutting path on the imaginary horizontal plane, the cutting paths of step 2 and the cutting paths of step 3 are joined through the imaginary horizontal plane.

3. The method for automatic creation of a cutting path in the interior space of a three-dimensional shaped product according to any one of claim 1 or 2, wherein in step 2, the cutting paths are created with the premise that a standard cutting tool is used for the lower end surface which is set by the program necessary for carrying out the lamination or sintering, before the horizontal cutting paths are created.

4. The method for automatic creation of a cutting path in the interior space of a three-dimensional shaped product according to any one of claim 1 or 2, wherein in step 3, the cutting paths are created with the premise that an undercut tool is used for the upper end surface which is set by the program necessary for carrying out the lamination or sintering, after the horizontal cutting paths are created.

5. The method for automatic creation of a cutting path in the interior space of a three-dimensional shaped product according to any one of claim 1 or 2, wherein, when the shape is comprised in that the horizontal direction width of the interior wall section gradually narrows along the upward direction in a partial region in the vertical direction, the horizontal cutting paths are created with the premise that an undercut tool is used in the regions of the interior wall section that exhibit the shape.

6. The method for automatic creation of a cutting path in the interior space of a three-dimensional shaped product according to any one of claim 1 or 2, wherein, when the shape is comprised in that the horizontal direction width of the interior wall section gradually narrows along the upward direction in a partial region in the vertical direction, while the interior wall section is vertical at the other height regions, the horizontal cutting paths in each of the steps 1, 2, 3 and 4 are created after inverting the upper end locations and the lower end locations.

7. The method for automatic creation of a cutting path in the interior space of a three-dimensional shaped product according to any one of claim 1 or 2, wherein, when the facing interior wall sections are parallel slanting state in all of the regions along the vertical direction, the horizontal cutting paths in each of the steps 1, 2, 3 and 4 are created after carrying out coordinate transformation from the slanting direction to the vertical direction in all of the regions of the three-dimensional shaped product.
